(19) Europäisches Patentamt
European Patent Office
Office européen des brevets

(11) **EP 2 439 902 A2**

(12) **EUROPÄISCHE PATENTANMELDUNG**

(43) Veröffentlichungstag:
**11.04.2012 Patentblatt 2012/15**

(51) Int Cl.:
*H04L 29/06* (2006.01)     *H04L 12/22* (2006.01)

(21) Anmeldenummer: **11184359.5**

(22) Anmeldetag: **07.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.10.2010   DE 102010038094**

(71) Anmelder: **Francotyp-Postalia GmbH**
**16547 Birkenwerder (DE)**

(72) Erfinder: **Bleumer, Gerrit**
**16552 Schildow (DE)**

(74) Vertreter: **Schaumburg, Thoenes, Thurn,**
**Landskron, Eckert**
**Patentanwälte**
**Postfach 86 07 48**
**81634 München (DE)**

(54) **Verfahren und Anordnung zum rechtsverbindlichen Senden und Empfangen von vertraulichen elektronischen Mitteilungen**

(57)     Die Erfindung betrifft ein Verfahren zum sicheren Übertragen mindestens einer elektronischen Mitteilung von einem ersten Endgerät (26) eines ersten Benutzers (A) zu mindestens einem zweiten Endgerät (40) eines zweiten Benutzers (B). Mit Hilfe des ersten Endgeräts (26) wird die elektronische Mitteilung erstellt. Mit Hilfe des zweiten Endgeräts (40) wird die elektronische Mitteilung empfangen. Vom ersten Endgerät (26) zum zweiten Endgerät (40) wird die elektronische Mitteilung mit Hilfe einer Infrastruktur (16) zum rechtsverbindlichen Übertragen von elektronischen Mitteilungen übertragen. Ein mit dem ersten Endgerät (26) verbundenes erstes Sicherheitsmodul (28) verschlüsselt und/oder signiert die elektronische Mitteilung, bevor diese mit Hilfe der Infrastruktur (16) von dem ersten Endgerät (26) zum zweiten Endgerät (40) übertragen wird. Ein mit dem zweiten Endgerät (40) verbundenes zweites Sicherheitsmodul (44) entschlüsselt die übertragene elektronische Mitteilung und/oder prüft die signierte elektronische Mitteilung.

FIG. 1

**Beschreibung**

Die Erfindung betrifft ein Verfahren und eine Anordnung zum sicheren Übertragen mindestens einer elektronischen Mitteilung von einem ersten Endgerät eines ersten Benutzers (Sender) zu mindestens einem zweiten Endgerät eines zweiten Benutzers (Empfänger).

Zum rechtsverbindlichen Übertragen von elektronischen Mitteilungen zwischen zwei Endgeräten sind das E-POST-System der Deutschen Post AG und das DE-Mail-System bekannt, die jeweils den rechtssicheren und vertraulichen Austausch elektronischer Dokumente zwischen Bürgern, Behörden und Unternehmen über das Internet ermöglichen sollen. Das Hauptziel dieser Systeme ist es, Zustellungen über das Internet rechtssicher vornehmen zu können. Außerdem erfolgt bei dem DE-Mail-System die Datenübertragung zwischen dem Internetserviceprovider des Senders und dem Internetserviceprovider des Empfängers verschlüsselt. Jedoch ist bei diesen existierenden Systemen zumindest bei dem oder den Providern selbst ein unberechtigter Zugriff auf die Daten der elektronischen Mitteilung möglich, wenn die Administrator-Rechte entsprechend genutzt werden.

Auch bei der Übertragung der elektronischen Mitteilungen von dem Endgerät des Senders zum Provider und vom Provider zum Endgerät des Empfängers kann ein unberechtigter Zugriff auf die Daten der elektronischen Mitteilung erfolgen. Als unberechtigter Zugriff wird dabei sowohl die Manipulation der Nachricht als auch der unberechtigte Zugriff auf die Information der Nachricht angesehen.

Aufgabe der Erfindung ist es, eine sichere Übertragung einer elektronischen Mitteilung von einem ersten Endgerät eines ersten Benutzers zu mindestens einem zweiten Endgerät eines zweiten Benutzers bei Verwendung einer Infrastruktur zum rechtsverbindlichen Übertragen von elektronischen Mitteilungen sicherzustellen ohne gleichzeitig dem Betreiber dieser Infrastruktur vertrauen zu müssen, dass er die gesendeten Nachrichteninhalte weder ausspäht noch modifiziert.

Diese Aufgabe wird durch ein Verfahren zum sicheren Übertragen mindestens einer elektronischen Mitteilung mit den Merkmalen des Anspruchs 1 sowie durch eine Anordnung mit den Merkmalen des weiteren unabhängigen Anspruchs gelöst. Vorteilhafte Weiterbildungen der Erfindung sind in den abhängigen Ansprüchen angegeben.

Durch das erfindungsgemäße Verfahren mit den Merkmalen des Anspruchs 1 und durch die Anordnung mit den Merkmalen des weiteren unabhängigen Anspruchs wird erreicht, dass mit Hilfe der senderseitig und empfängerseitig vorgesehenen Sicherheitsmodule eine kryptografische Verarbeitung der Daten der elektronischen Mitteilung erfolgt, sodass auf einfache Weise eine Ende-zu-Ende-Verschlüsselung der Mitteilung zwischen dem ersten Endgerät und dem zweiten Endgerät möglich ist. Dadurch wird ein unberechtigter Zugriff auf die Information der elektronischen Mitteilung durch die an der Bereitstellung der Infrastruktur zum rechtsverbindlichen Übertragen von elektronischen Mitteilungen beteiligten Instanzen, wie einem Internetserviceprovider, und somit eine Manipulation der elektronischen Mitteilung sicher verhindert, sogar dann, wenn der Internetserviceprovider seine Administrator-Rechte für derartige Zwecke missbrauchen würde. Dabei ist der erste Benutzer vorzugsweise der Sender und der zweite Benutzer der Empfänger.

Vorteilhaft ist es, wenn das erste Sicherheitsmodul mit dem ersten Endgerät über eine erste Datenübertragungsverbindung und/oder das zweite Sicherheitsmodul und das zweite Endgerät über eine zweite Datenübertragungsverbindung verbunden sind. Die erste Datenübertragungsverbindung und/oder die zweite Datenübertragungsverbindung können dabei insbesondere durch einen Übertragungskanal in einem Netzwerk, vorzugsweise als Übertragungskanal in einem drahtlosen Netzwerk gebildet sein. Alternativ kann die erste Datenübertragungsverbindung durch ein Bussystem des ersten Endgeräts und/oder durch eine standardisierte Anwendungsschnittstelle bereitgestellt werden. Ferner kann die zweite Datenübertragungsverbindung durch ein Bussystem des zweiten Endgeräts und/oder durch eine standardisierte Anwendungsschnittstelle bereitgestellt werden. Die Anwendungsschnittstellen können insbesondere durch eine Software bereitgestellt werden und werden auch als API bezeichnet. Als Bussystem kann insbesondere ein internes Bussystem des ersten Endgeräts, wie ein PCI-Bus, ein PCI-Express-Bus, ein ISA-Bus, ein Universal-Serial-Bus oder ein geeigneter anderer Datenbus eingesetzt werden.

Durch die angegebenen Verbindungsmöglichkeiten zwischen dem Sicherheitsmodul und dem Endgerät können verschiedenartige Ausbildungen des Sicherheitsmoduls vorgesehen werden, insbesondere als separates Endgerät, als Baueinheit des Endgeräts oder als vom Endgerät abgearbeiteten Softwaremoduls.

Bei einer vorteilhaften Weiterbildung der Erfindung wird die elektronische Mitteilung mit Hilfe der Infrastruktur zum rechtsverbindlichen Übertragen von elektronischen Mitteilungen vom ersten Endgerät zu einem Provider übertragen und die Mitteilung vom Provider zum zweiten Endgerät übertragen. Alternativ oder zusätzlich kann die vom ersten Endgerät zum Provider übertragene elektronische Mitteilung vom Provider verschlüsselt werden. Dieser Provider ist ein erster Provider. Die verschlüsselte elektronische Mitteilung kann dann vom ersten Provider zu einem zweiten Provider übertragen werden. Nachfolgend wird die Mitteilung vom zweiten Provider entschlüsselt und zum zweiten Endgerät übertragen. Dadurch erfolgt eine gemäß der Infrastruktur zum rechtsverbindlichen Übertragen von elektronischen Mitteilung erforderliche Verschlüsselung der elektronischen Mitteilung bei deren Übertragung zwischen zwei Providern.

Vorzugsweise umfasst die Infrastruktur für rechtsverbindliche elektronische Mitteilungen mindestens eine, vorzugsweise alle folgenden Funktionen und Dienste:

- einen Registrierungsdienst zur Registrierung neuer Benutzer, und damit einer Etablierung einer ersten Identität des registrierten Benutzers
- einen Authentifizierungsdienst zur Authentifizierung von Identitäten bereits registrierter Benutzer, wobei die Authentifizierung einer Identität eines Benutzers erst nach dessen Registrierung erfolgreich sein kann,
- einen Sendedienst für zu sendende elektronische Mitteilungen von einer Identität des registrierten Absenders (erster Benutzer) an eine Identität eines registrierten Empfängers (zweiter Benutzer),
- einen Empfangsdienst für zu empfangende elektronische Mitteilungen,
- einen Überprüfungsdienst zum Ermitteln und/oder zum Überprüfen von Empfängeradressen,
- einen Nachrichtendienst zum Erzeugen von Zustellbestätigungen und/oder Empfangsbestätigungen,
- einen Archivierungsdienst zum Archivieren von Mitteilungen und/oder elektronischen Dokumenten.

Durch diese Infrastruktur wird sichergestellt, dass die für rechtsverbindliche elektronische Mitteilungen einzuhaltenden Vorgaben auf einfache Art eingehalten werden können.

Weiterhin ist es vorteilhaft, mindestens eine Datenverarbeitungseinheit zum Bereitstellen von Diensten zum sicheren Übertragen von elektronischen Mitteilungen vorzusehen, durch die der Versand der verschlüsselten und/oder signierten elektronischen Mitteilungen freigegeben wird. Das Freigeben des Versands der verschlüsselten und/oder signierten elektronischen Mitteilungen kann insbesondere in Abhängigkeit von der Entrichtung eines Entgelts erfolgen. Alternativ oder zusätzlich kann diese Datenverarbeitungseinheit einen Nutzerverwaltungsdienst zur Registrierung der Benutzer bereitstellen, deren Benutzeridentität in dem ersten und/oder dem zweiten Sicherheitsmodul gespeichert sind. Dadurch kann eine von der Infrastruktur unabhängige Verwaltung der Benutzer für die erfindungsgemäße sichere Übertragung der elektronischen Mitteilungen bereitgestellt werden.

Besonders vorteilhaft ist es, wenn durch das erste Sicherheitsmodul und/oder durch das zweite Sicherheitsmodul ein Identifizierungsdienst zur Identifizierung eines im Sicherheitsmodul registrierten Benutzers bereitgestellt wird, wobei der Benutzer mit Hilfe einer Benutzeranmeldung, wie Benutzername und Passwort, einer Benutzeranmeldung mit Hilfe biometrischer Daten des Benutzers, die mit Hilfe eines biometrischen Sensors erfasst werden, einem per Internet und/oder per drahtloser Datenübertragungsverbindung verbundenen Sicherheitsmodul, und/oder einer Chipkarte identifiziert wird. Dadurch ist eine einfache Identifizierung des Nutzers durch das Sicherheitsmodul möglich. Nach einer Identifizierung des Benutzers und Authentifizierung des Benutzers können insbesondere im Sicherheitsmodul gespeicherte Benutzerinformationen zur Identifizierung des Benutzers bei Komponenten der Infrastruktur zum rechtsverbindlichen Übertragen elektronischer Nachrichten genutzt werden. Dadurch ist eine einfache und sichere Identifizierung und Authentifizierung des Benutzers sowohl beim Sicherheitsmodul als auch bei der Infrastruktur zum Übertragen elektronischer Mitteilungen möglich.

Bei einer Identifizierung des ersten Benutzers und/oder des zweiten Benutzers über das Sicherheitsmodul ihres jeweiligen Endgeräts kann eine mobile Transaktionsnummer, die von der Infrastruktur zum rechtsverbindlichen Übertragen elektronischer Mitteilungen zum E-Postage Provider und von dort zum Sicherheitsmodul übertragen wird, identifiziert werden, wobei durch das erste Endgerät eine Anforderung zum Übersenden der mobilen Transaktionsnummer an die Infrastruktur gesendet wird und wobei durch eine Datenverarbeitungseinheit der Infrastruktur eine Transaktionsnummer generiert und zum E-Postage Provider und von dort zum Sicherheitsmodul des Endgeräts des Benutzers übertragen wird. Dadurch ist eine einfache und effiziente Möglichkeit gegeben, einen Zugang nur für den Benutzer zu ermöglichen, der im Besitz des Sicherheitsmoduls ist, zu dem die Transaktionsnummer letztlich übertragen wird.

Die Übermittlung der mobilen Transaktionsnummer vom Internet-ServiceProvider zum E-Postage Provider erfolgt entweder leitungsgebunden oder über ein Funknetz (z.B. GSM, GPRS, UMTS), wobei der E-Postage Provider für den ersten und den zweiten Benutzer (A), (B) jeweils ein eigenes Nutzerkonto vorhält. Die Übermittlung einer mobilen Transaktionsnummer vom E-Postage Provider zum Sicherheitsmodul erfolgt über den verschlüsselten Kommunikationskanal (50). Dabei kann die Information entweder auf leitungsgebundenem Weg (z. B. Internet) oder durch ein Funknetz (z.B. GSM, GPRS, UMTS) übertragen werden.

Ferner ist es vorteilhaft, wenn die elektronische Mitteilung über eine gesicherte Datenverbindung zum Provider übertragen wird, wobei die gesicherte Datenverbindung zwischen dem jeweiligen Endgerät und dem Provider hergestellt wird. Durch das erste Endgerät wird dann vorzugsweise die kryptografisch gesicherte Identität des Providers geprüft. Vorzugsweise erfolgt diese Überprüfung mit Hilfe eines dem ersten Endgerät zur Verfügung stehenden kryptographischen Zertifikats. Dieses Zertifikat ist vorzugsweise in einem Speicherbereich des ersten Sicherheitsmoduls gespeichert ist. Die Verwendung eines kryptographischen Zertifikats verhindert eine einfache Manipulation des Zertifikats. Ein solches Zertifikat muss bei Einhaltung hoher Sicherheitsstandards nur alle ein bis fünf Jahre erneuert werden, vorzugsweise alle drei Jahre. Durch die Verwendung des Zertifikats kann durch das Sicherheitsmodul geprüft werden, ob die gesicherte Datenverbindung tatsächlich zu dem gewünschten Provider aufgebaut wird oder ob die Zieladresse des Providers manipuliert wurde und ein anderer nicht gewünschter Teilnehmer anstelle des Providers tritt, zu dem ohne Überprüfung der Identität des Providers eine gesicherte Datenverbindung aufgebaut werden würde. Dadurch wird verhindert, dass die gesicherte Datenübertragungsverbindung zu einem nicht gewünschten Teilnehmer umgeleitet wird. Dadurch kann die Sicherheit der Datenübertragung erhöht und Manipulationen der elektronischen Mitteilung und ein unberechtigter Zugriff auf die elektronische Mitteilung verhindert werden.

Ferner ist es vorteilhaft, wenn Informationen über die gesicherte Identität des jeweiligen Sicherheitsmoduls vom jeweiligen Endgerät angefordert und vom jeweiligen Sicherheitsmodul zum jeweiligen Endgerät übertragen werden. Das jeweilige Endgerät wird dann mit Hilfe dieser Informationen beim Provider identifiziert. Dadurch kann beispielsweise das erste Endgerät beim ersten Sicherheitsmodul eine Information über dessen gesicherte Identität anfordern, wobei das erste Sicherheitsmodul diese Information zum ersten Endgerät überträgt. In gleicher Weise kann das zweite Endgerät beim zweiten Sicherheitsmodul eine Information über die gesicherte Identität des zweiten Sicherheitsmoduls anfordern, die dann vom zweiten Sicherheitsmodul zum zweiten Endgerät übertragen wird. Dadurch ist eine einfache Identifizierung des Endgeräts beim Provider mit Hilfe der gesicherten Identität des Sicherheitsmoduls möglich. Insbesondere können für mehrere Benutzer mehrere gesicherte Identitäten im Sicherheitsmodul gespeichert sein, die dann bei einer Benutzeranmeldung eines Benutzers, für den Informationen über seine gesicherte Identität im Sicherheitsmodul gespeichert sind, aus dem Sicherheitsmodul ausgelesen und zum jeweiligen mit dem Sicherheitsmodul verbundenen Endgerät übertragen werden können. Das Endgerät kann dann mit Hilfe dieser dem Benutzer zugeordneten Information das Endgerät und/oder den Benutzer beim Provider identifizieren. Dadurch ist eine einfachere und sichere Identifizierung des Benutzers und/oder des Endgeräts beim Provider möglich.

Ein erster im ersten Sicherheitsmodul registrierter Benutzer ist vorzugsweise eine juristische Person. Ein zweiter im ersten Sicherheitsmodul registrierter Benutzer ist eine natürliche Person, die nach einer Anmeldung am ersten Endgerät und/oder am ersten Sicherheitsmodul eine Mitteilung im Namen des ersten Benutzers rechtsverbindlich senden kann. Zusätzlich kann der zweite Benutzer Nachrichten für den ersten Benutzer empfangen, wobei das Sicherheitsmodul dann verschlüsselte elektronische Mitteilungen entschlüsselt und/oder signierte elektronische Mitteilungen prüft.

Bei einer weiteren vorteilhaften Ausgestaltung der Erfindung ist zumindest im ersten Sicherheitsmodul eine Kontoinformation gespeichert. Diese Kontoinformation umfasst die Zugriffsmöglichkeit auf ein Kontospeicherelement, das insbesondere einem Benutzer und/ oder dem Sicherheitsmodul zugeordnet ist. Von einem in dem Kontospeicherelement gespeicherten Wert wird dann ein voreingestellter Betrag abgezogen, wenn durch das erste Sicherheitsmodul eine elektronische Mitteilung verschlüsselt wird, die dann mit Hilfe des ersten Endgeräts gesendet und mit Hilfe der Infrastruktur zum zweiten Endgerät übertragen wird. Das erste Sicherheitsmodul und/oder eine zentrale Datenverarbeitungseinheit kann dann nach dem Abzug des Betrags vom gespeicherten Wert zusätzlich oder alternativ eine Freigabeinformation an den Provider senden, die erforderlich ist, damit der Provider die Nachricht weiter zum Empfänger leitet. Die an den Provider übersandte Freigabeinformation kann insbesondere eine Zahlungsinformation umfassen, von der abhängig der Provider die elektronische Mitteilung weiterleitet. Dadurch wird erreicht, dass eine einfache Entrichtung der vom Provider geforderten Gebühren für die Handhabung der zu sendenden elektronischen Mitteilung und für das erfindungsgemäße Verschlüsseln und/oder Signieren erforderlichen Gebühren entrichtet werden können. Insbesondere sind dazu keine weiteren Bedienschritte des Benutzers erforderlich.

Das erste Endgerät überträgt zum Verschlüsseln und/oder zum Signieren der elektronischen Mitteilung vorzugsweise zumindest den Nachrichteninhalt, mindestens eine Angabe zum Empfänger und wahlweise eine der nachfolgenden Informationen zum ersten Sicherheitsmodul:

- Informationen, ob eine öffentlich verifizierbare Signatur erforderlich ist,
- Informationen, ob ein Zeitstempel erzeugt werden soll,
- der öffentliche Schlüssel des Nachrichtenempfängers zum Verschlüsseln des Nachrichteninhalts, insbesondere dann, wenn die Nachricht verschlüsselt werden soll,
- einen Signaturschlüssel zum Signieren der Nachricht, insbesondere dann, wenn der Nachrichteninhalt signiert werden soll,
- eine Information zum Abrechnungsmodus.

Dadurch erhält das Sicherheitsmodul auf einfache Art und Weise Informationen zum Verschlüsseln, Signieren und/oder Abrechnen der elektronischen Mitteilung.

Ferner ist es vorteilhaft, wenn ein privater Schlüssel des Empfängers zum Verschlüsseln der elektronischen Mitteilung und/oder ein Signaturschlüssel zum Signieren der elektronischen Mitteilung in einem Speicherbereich des ersten Sicherheitsmoduls und/oder in einem Speicherbereich einer zentralen Datenverarbeitungseinheit gespeichert wird. Aus der zentralen Datenverarbeitungseinheit kann der Schlüssel des Empfängers zum Verschlüsseln der elektronischen Mitteilung und/oder der Signaturschlüssel ausgelesen werden. Dieser bzw. diese Schlüssel werden vom Sicherheitsmodul zum Verschlüsseln bzw. zum Signieren der Nachricht genutzt. Dadurch ist eine einfache Schlüsselverwaltung im Sicherheitsmodul selbst und/oder in der zentralen Datenverarbeitungseinheit möglich.

Weiterhin ist es vorteilhaft, wenn das erste Sicherheitsmodul und/oder das zweite Sicherheitsmodul eine in das Endgerät integrierte Komponente ist. Diese Komponente ist vorzugsweise über einen Datenbus mit weiteren Komponenten des ersten bzw. zweiten Endgeräts verbunden. Alternativ kann das Sicherheitsmodul durch eine vom Endgerät abgearbeitete Software bereitgestellt werden. Dadurch sind zwei vorteilhafte Möglichkeiten zum Bereitstellen des Sicherheitsmoduls gegeben.

Bei einer vorteilhaften Weiterbildung der Erfindung werden Informationen zwischen dem jeweiligen Sicherheitsmodul und einem Provider, der zumindest einen Teil der Infrastruktur zur rechtsverbindlichen Übermittlung von rechtsverbindlichen elektronischen Mitteilungen bereitstellt, über das jeweilige Endgerät übertragbar. Vorzugsweise ist keine direkte Datenübertragung zwischen dem Sicherheitsmodul und dem Provider möglich. Dadurch wird ein zusätzlicher Schutz des Sicherheitsmoduls erreicht, da keine direkten externen Zugriffe auf das Sicherheitsmodul möglich sind. Vorzugsweise ist zwischen dem Sicherheitsmodul und dem jeweiligen Endgerät nur ein Datenaustausch gemäß einem voreingestellten Protokoll möglich, das nur bestimmte für die sichere Übertragung rechtsverbindlicher elektronischer Mitteilungen erforderliche Anweisungen und Datenaustauschschritte vorsieht, sodass eine Manipulation des Sicherheitsmoduls effektiv verhindert wird.

Als Provider im Sinne der Erfindung wird jeder Dienstleister angesehen, der die Übertragung von Daten zumindest auf einer Teilstrecke zwischen dem ersten Endgerät und dem zweiten Endgerät ermittelt. Solche Provider sind insbesondere Internetserviceprovider, E-Mail-Provider und/oder Telekommunikationsdienstleister. Diese Provider stellen insbesondere Dienste und/oder Infrastruktur für die rechtsverbindliche Übermittlung von Mitteilungen bereit.

Weitere Merkmale und Vorteile der Erfindung ergeben sich aus der folgenden Beschreibung, die die Erfindung anhand eines Ausführungsbeispiels im Zusammenhang mit den beigefügten Figuren näher erläutert.

Es zeigen:

Figur 1 ein Blockschaltbild einer Anordnung zum sicheren und rechtsverbindlichen Übertragen elektronischer Mitteilungen zwischen mindestens zwei Endgeräten gemäß einer ersten Ausführungsform der Erfindung;

Figur 2 ein Blockschaltbild mit den von dem Endgerätesystem eines Benutzers genutzten physikalischen Datenübertragungsverbindungen.

Figur 3 ein Blockschaltbild mit Komponenten des Endbenutzersystems zum Erzeugen und Senden sowie Empfangen und Anzeigen sicherer rechtsverbindlicher elektronischer Mitteilungen; und

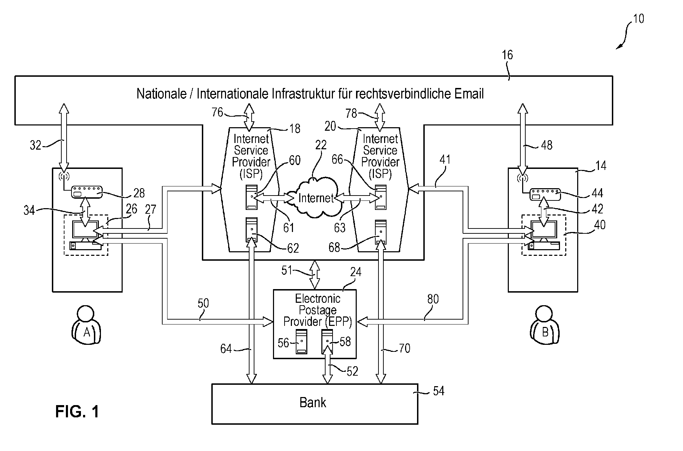

In Figur 1 ein Blockschaltbild einer Anordnung 10 zum sicheren rechtsverbindlichen Übertragen von E-Mail Nachrichten zwischen einem ersten Endbenutzersystem 12 eines Benutzers A und einem zweiten Endbenutzersystem 14 eines Benutzers B dargestellt. In der Anordnung 10 ist eine nationale und/oder internationale Infrastruktur für rechtsverbindliche E-Mails schematisch als Block 16 dargestellt, wobei die für diese Infrastruktur 16 erforderlichen Dienste durch verschiedene Datenverarbeitungseinheiten bereitgestellt werden, insbesondere durch Internetserviceprovider 18, 20 und/oder weitere über das Internet 22 kontaktierbare Datenverarbeitungssysteme. Zusätzlich zur Infrastruktur 16 und den Internetserviceprovidern 18, 20 sind die Endbenutzersysteme 12, 14 über Datenübertragungsstrecken 50, 80 mit einem sogenannten Electronic Postage Provider (EPP) 24 verbunden. Durch den Electronic Postage Provider 24 werden Dienste bereitgestellt, die das sichere Übertragen rechtsverbindlicher elektronischer Mitteilungen, wie E-Mail-Nachrichten, ermöglichen und unterstützen. Der Electronic Postage Provider 24 ist über eine durch den Pfeil angeordnete Datenübertragungsstrecke 51 mit weiteren Datenverarbeitungseinheiten (nicht dargestellt) der Infrastruktur 16 verbunden.

Die Kommunikation zwischen dem Endbenutzersystem 12 und dem Electronic Postage Provider 24 kann insbesondere über dieselbe Datenleitung bzw. denselben Internetanschluss des jeweiligen Endbenutzersystems 12 erfolgen wie die Verbindung zum Internetserviceprovider 18, 20. Das Endbenutzersystem 12 umfasst einen Personalcomputer 26, der als Endgerät zum Erstellen von E-Mail-Nachrichten, zum Senden dieser E-Mail-Nachrichten nach dem Erstellen und zum Empfangen von E-Mail-Nachrichten dient. In Verbindung mit dem Internetserviceprovider 18 und der weiteren Infrastruktur 16 ist es möglich, mit Hilfe des Personalcomputers 26 rechtsverbindliche E-Mail-Nachrichten zu mindestens einem weiteren Endbenutzersystem 14 zu übertragen und von dem weiteren Endbenutzersystem 14 gesendete rechtsverbindliche E-Mail-Nachrichten zu empfangen. Das Endbenutzersystem 12 umfasst ein über mindestens eine Schnittstelle 34 mit dem Personalcomputer 26 verbundenes Sicherheitsmodul 28, das im vorliegenden Ausführungsbeispiel in einer Frankiermaschine angeordnet ist. Zwischen dem Sicherheitsmodul 28 und der Infrastruktur 16 können über die Datenübertragungsstrecken 51 und 50 Daten ausgetauscht werden und insbesondere Daten mit Zugangsinformationen und/oder Authentifizierungsinformationen von einem Dienst der Infrastruktur 16 zum Sicherheitsmodul 28 über einen gesicherten Kanal übertragen werden. Alternativ kann zur leitungsgebundenen Übertragungsstrecke 50 auch eine Funknetzverbindung, wie WLAN, GSM, UMTS, verwendet werden. In diesem Fall wäre das Sicherheitsmodul 28 selbst mit einer Antenne und einem Funktnetzcontroller ausgestattet.

Zwischen dem Personalcomputer 26 und dem Internetserviceprovider 18 ist über eine Datenübertragungsstrecke 27 eine Datenverbindung aufbaubar, über die ein Zugang des Personalcomputers 26 zu den E-Mail-Diensten des Internetserviceproviders 18 und zum Internet 22 möglich ist. Vom Personalcomputer 26 zu sendende rechtsverbindliche E-Mail-Nachrichten und vom Personalcomputer 26 zu empfangende rechtsverbindliche E-Mail-Nachrichten werden zwischen dem Personalcomputer 26 und dem Internetserviceprovider 18 vorzugsweise über die Datenübertragungsstrecke 27 mit Hilfe einer gesicherten Datenverbindung übertragen.

Das zweite Endbenutzersystem 14 umfasst einen Personalcomputer 40 als zweites Endgerät der Anordnung 10 sowie ein über eine Datenschnittstelle 42 mit dem Personalcomputer 40 verbundenes Sicherheitsmodul 44, das wie das Sicherheitsmodul 28 in einer Frankiermaschine angeordnet ist. Zwischen dem Sicherheitsmodul 44 und der Infrastruktur 16 können über die Datenübertragungsstrecken 51 und 80 Daten ausgetauscht werden und insbesondere Daten mit Zugangsinformationen und/oder Authentifizierungsinformationen von einem Dienst der Infrastruktur 16 zum Sicherheitsmodul 44 übertragen werden. Alternativ zur leitungsgebundenen Übertragungsstrecke 80 kann auch eine Funknetzverbindung, wie WLAN, UMTS, GSM, verwendet werden. In diesem Fall wäre das Sicherheitsmodul 28 selbst mit einer Antenne und einem Funktnetzcontroller ausgestattet.

Zum Registrieren eines Benutzers A am Personalcomputer 26 für die Sende- und/oder Empfangsdienste zum Senden und/oder Empfangen rechtsverbindlicher E-Mail-Nachrichten wird vom Personalcomputer 26 eine Authentifizierungsanforderung über die Datenverbindung 27 zum Internetserviceprovider 18 übertragen, der diese an einen Authentifizierungsdienst der Infrastruktur 16 weiterleitet. Die Infrastruktur 16 erzeugt eine Transaktionsnummer und überträgt diese Transaktionsnummer über die Datenübertragungsstrecken 51 und 50 zum Sicherheitsmodul 28. Nach Empfang dieser Transaktionsnummer gibt das Sicherheitsmodul 28 diese Transaktionsnummer über die Schnittstelle 34 an den Personalcomputers 26 weiter und registriert so den Benutzer. Alternativ oder zusätzlich kann der Benutzer sich durch Erfassen einer biometrischen Eigenschaft des Benutzers mit Hilfe eines biometrischen Sensors am Sicherheitsmodul 38 anmelden. Alternativ oder zusätzlich kann eine Authentifizierung des Benutzers durch eine aus einer Chipkarte ausgelesene Signatur erfolgen, die mit Hilfe einer Leseeinheit nach Eingabe der Chipkarte durch den Benutzer A aus der Chipkarte gelesen und dann zur Authentifizierung des Benutzers genutzt wird. Die Chipkarte kann mit einer Leseeinheit des Personalcomputers 26 oder mit Hilfe einer Leseeinheit des Sicherheitsmoduls 28 gelesen werden.

Über die Datenverbindung 27 wird eine Kommunikationsschnittstelle zwischen dem Endbenutzersystem 12 und dem Internetserviceprovider 18 bereitgestellt, über die das Senden und Empfangen von sicheren rechtsverbindlichen E-Mail-Nachrichten sowie das empfangen von Zustell- und Empfangsbestätigungen, ein Zugang zu einem zentralen Adressverzeichnis, eine Postfachverwaltung und/oder ein Archivierungsdienst für E-Mail-Nachrichten und angefügte Dokumente möglich ist. Der Aufbau einer sicheren Verbindung über die Datenübertragungsstrecke 27 erfolgt beispielsweise mit Hilfe eines unidirektionalen Softwarekeymanagements auf Basis von HTTPS/SSL oder TLS. Dabei prüft der Personalcomputer 26 insbesondere die kryptographisch gesicherte Identität des Internetserviceproviders 18, beispielsweise über fest in die vom Personalcomputer 26 abgearbeitete Software integrierte Nutzerzertifikate. Der Personalcomputer 26 liest aus dem Sicherheitsmodul 28 Informationen über die gesicherte Identität des Sicherheitsmoduls 28 aus und identifiziert sich als Endgerät 26 des Benutzers A beim Internetserviceprovider 18 mit Hilfe dieser Informationen. Ferner überträgt der Personalcomputer 26 die zu verschlüsselnden Daten der zu sendenden rechtsverbindlichen E-Mail-Nachricht über die Schnittstelle 34 zum Sicherheitsmodul 28, das dann die Daten je nach Anforderung verschlüsselt und/oder signiert. Abhängig von der Anforderung und den für den jeweiligen Benutzer A, B hinterlegten Entgeltkonditionen erfolgt eine Belastung eines im Sicherheitsmodul 18 mit Hilfe eines Kontospeicherelements verwalteten Guthabenkontos. Das Sicherheitsmodul 28 stellt insbesondere folgende Dienste zur Verfügung:

- Identitätsabfrage des Benutzers,
- Verschlüsseln von Daten,
- digitales Signieren von Daten,
- Gebührenabrechnung.

Ferner ist eine Datenübertragungsstrecke 50 zwischen dem Personalcomputer 26 und dem Electronic Postage Provider 24 vorgesehen. Die Datenübertragungsstrecke 50 kann beispielsweise durch eine gesicherte Datenübertragungsverbindung über das Internet 22 bereitgestellt werden. Über die Datenübertragungsstrecke 50 erfolgt eine Registrierung des Sicherheitsmoduls beim Electronic Postage Provider. Diese Registrierung wird für jeden neuen am Sicherheitsmodul 28 zu registrierenden Benutzer A, B wiederholt. Ferner erfolgt eine Überprüfung der Identität des Sicherheitsmoduls 28 über den Datenübertragungskanal 50 vor einer elektronischen Transaktion, d. h. vor jedem Verschlüsseln und/oder Signieren einer zu sendenden E-Mail und vor dem Entschlüsseln und/oder Überprüfen der Signatur einer empfangenen E-Mail.

Ferner kann das Guthabenkonto des Sicherheitsmoduls 28 über die Datenübertragungsstrecke 50 aufgeladen werden, wenn der Electronic Postage Provider 24 eine Zahlung für den Benutzer A ober für das Sicherheitsmodul über eine Bankschnittstelle 52 von einer Bank 54 erhält. Der Electronic Postage Provider 24 hat vorzugsweise mindestens zwei Datenverarbeitungseinheiten, eine erste Datenverarbeitungseinheit 56 zur Verwaltung von Benutzern und deren öffentlichen Schlüsseln zum Verschlüsseln von Nachrichten sowie ggf. von Signaturschlüsseln und mindestens eine zweite Datenverarbeitungseinheit 58 zur Gebührenverwaltung sowie von Guthabenkonten der Benutzer A, B bzw. Guthabenkonten der Sicherheitsmodule 28, 44. Ferner können über den Datenübertragungskanal 50 weitere administrative Transaktionen, wie das Sperren und Entsperren des Sicherheitsmoduls 28, das Laden von Tariftabellen mit Entgelten für mögliche Transaktionen usw. automatisch durchgeführt werden.

Der Aufbau der gesicherten Datenübertragungsverbindung über den Datenübertragungskanal 50 erfolgt beispielsweise durch ein bidirektionales Hardware Key Management auf Basis des Diffie-Hellmann-Verfahrens. Dabei kann das Sicherheitsmodul 28 die Identität des Electronic Postage Providers 24 prüfen. Wie bereits erwähnt kann dies über im Sicherheitsmodul 28 gespeicherte und vorzugsweise nur lesbare Wurzelzertifikate erfolgen. Der Electronic Postage Provider 24 kann die Identität des Sicherheitsmoduls 28 insbesondere mit Hilfe eines in einer Datenbank des Electronic Postage Providers 24 gespeicherten Schlüssels des Sicherheitsmoduls 28, prüfen. Dazu können mehrere Schlüssel in einem Schlüsselverzeichnis gespeichert sein, auf das mit Hilfe eines Lightweight Directory Access Protokoll (LDAP) zugegriffen wird (LDAP Schlüsselverzeichnis).

Für den Fall, dass das Sicherheitsmodul des Empfängers in Software ausgeprägt ist, wird der Absender vorzugsweise einen frischen, geheimen Nachrichtenschlüssel verwenden, um die zu sendende Nachricht zu verschlüsseln und dadurch implizit zu authentisieren. Den verwendeten geheimen Nachrichtenschlüssel sendet der Absender direkt, beispielsweise als SMS-Text, an den Empfänger, der ihn in sein Sofware-Sicherheitsmodul eingibt.

Der Internetserviceprovider 18 hat mindestens zwei Datenverarbeitungseinheiten insbesondere einen Sicherheitsserver 60 und einen Abrechnungsserver 62 zum Abrechnen von Endgelten, die beim Handhaben von rechtsverbindlichen E-Mail-Nachrichten erhoben werden. Dies sind sowohl Entgelte, die der jeweilige Endbenutzer A, B beim Senden einer rechtsverbindlichen E-Mail-Nachricht zu entrichten hat als auch Entgelte, die die Serviceprovider 18, 20 untereinander beim Senden von rechtsverbindlichen E-Mail-Nachrichten einander in Rechnung stellen.

Der Abrechnungsserver 62 hat ferner eine Bankschnittstelle 64, über die Daten zwischen dem Abrechnungsserver 62 und der Bank 54 oder einer weiteren bzw. einem Bank ausgetauscht werden können. Der zweite Internetserviceprovider 20 hat in gleicher Weise wie der erste Internetserviceprovider 18 einen Sicherheitsserver 66 und einen Abrechnungsserver 68. Der Abrechnungsserver 68 ist über eine Bankschnittstelle 70 mit der Bank 54 verbunden, über die Daten, insbesondere mit Zahlungsinformationen austauschbar sind. Über die Bankschnittstellen 64, 70 erhalten die Internetserviceprovider 18, 20 und über die Bankschnittstelle 52 erhält der Electronic Postage Provider 24 Informationen über Zahlungseingänge für Benutzerkonten der Benutzer A und/oder B. Die Abrechnungsserver 62, 68 der Internetserviceprovider 18, 20 sind über jeweils eine Datenübertragungsstrecke 72, 74 mit den Abrechnungsservern 60, 68 verbunden, sodass Informationen über Zahlungseingänge und/oder Zahlungen für die Benutzerkonten der Benutzer A, B auch zwischen dem Abrechnungsserver 58 des Electronic Postage Providers 24 und den Abrechnungsservern 62, 68 der Internetserviceprovider 18, 20 übertragbar sind.

Die Internetserviceprovider 18, 20 sind ferner über jeweils eine Datenübertragungsstrecke 76, 78 mit weiteren Diensten der Infrastruktur 16 für rechtsverbindliche E-Mail-Nachrichten verbunden. Mit Hilfe dieser Dienste ist insbesondere ein sicherer Datenaustausch zwischen den Internetserviceprovidern 18, 20 möglich, sodass ein Abruf von sicheren Identifikationsinformationen von Endbenutzern A, B möglich ist. Ferner kann durch die Dienste der Infrastrukturein Registrierungsdienst für Endbenutzer bereitgestellt werden.

Die Server 60, 62 des ersten Internetserviceproviders 18, die Server 66, 68 des zweiten Internetserviceproviders 20 und die Datenverarbeitungseinheiten 56, 58 des Electronic Postage Providers 24 sind jeweils über geeignete Datenübertragungsverbindungen, wie einem internen Netzwerk, miteinander verbunden. Über die Datenübertragungsverbindungen 72, 74 erhält der Electronic Postage Provider 24 Abrechnungsinformationen für den jeweiligen Endbenutzer A, B von den Internetserviceprovidern 18, 20. Zur Begleichung dieser Rechnungsbeträge weist der Electronic Postage Provider 24 über die Bankschnittstelle 64 bei der Bank 54 an, den Rechnungsbetrag der Rechnungsinformationen auf einem Konto des Internetserviceproviders 18, 20 gutzuschreiben. Die Bank 54 überträgt eine entsprechende Zahlungsinformation über die Datenübertragungskanäle 64, 70 zum jeweiligen Internetserviceprovider 18, 20. Über die Bankschnittstelle 52 erhält der Electronic Postage Provider 24 eine Mitteilung über eine Zahlung von Endbenutzern A, B auf ihre Guthabenkonten. Die entsprechenden Guthaben stehen den Kunden dann in Form von elektronischem Porto zum Download auf ihr Sicherheitsmodul 28, 44 über die Datenübertragungsstrecke 50, 80 zur Verfügung. Die Kommunikation zwischen den Komponenten 40, 44, 46 des zweiten Endbenutzersystems 14 untereinander und mit dem zweiten Internetserviceprovider sowie dem Electronic Postage Provider 24 erfolgt auf die gleiche Weise wie für die Komponenten 26, 28, 30, den ersten Internetserviceprovider 18 und das Electronic Postage Provider 24 beschrieben.

Nachfolgend werden die Abläufe zur Nachrichtenübermittlung und Nachrichtenverarbeitung zwischen den Komponenten der Anordnung 10 beschrieben. Der Personalcomputer 26 dient als Mittler zwischen dem Sicherheitsmodul 28 und dem Internetserviceprovider 18, sodass keine direkte Verbindung, insbesondere keine Onlineverbindung zwischen dem Sicherheitsmodul 28 und dem Sicherheitsserver 60 des Internetserviceproviders 18 herstellbar ist. Zwischen dem Electronic Postage Provider 24 und jedem Internetserviceprovider 18, 20 erfolgt eine manuell gesicherte Übermittlung eines Electronic Postage Providers Verification Key. Mit Hilfe dieses Schlüssels verifiziert der jeweilige Internetserviceprovider 18, 20 anschließend die Zertifikatsketten aller Sicherheitsmodule 28, 42.

Die Registrierung eines neuen Benutzers C von einem Internetserviceprovider 18 kann wie nachfolgend erläutert durchgeführt werden. Im ersten Schritt fordert der Personalcomputer eine ID des Sicherheitsmoduls 28 beim Sicherheitsmodul 28 an. Daraufhin sendet das Sicherheitsmodul 28 seine ID mit mehreren Zertifikaten, wobei das erste Zertifikat die Identität des Sicherheitsmoduls 24, einen Zeitstempel, Benutzerdaten, wie Firma, Adresse, Kontakt und falls genutzt eine mobile Transaktionsnummer, die durch das Sicherheitsmodul signiert worden ist, umfassen. Ein weiteres Zertifikat kann ein Public Key Zertifikat des Sicherheitsmoduls 28 sein, das vom Electronic Postage Provider 24 zuvor zertifiziert worden ist.

Der Personalcomputer 26 leitet die ID des Sicherheitsmoduls 28 zusammen mit den Zertifikaten an den Internetserviceprovider 18 weiter. Bei dieser Vorgehensweise fungierte der Personalcomputer 26 als Mittler (Relay) zwischen dem Sicherheitsmodul 28 und dem Internetserviceprovider 18, sodass keine Onlineverbindung zwischen dem Sicherheitsmodul 28 und dem Sicherheitsserver 60 des Internetserviceproviders 18 erforderlich ist. Vorzugsweise wird ein anderes Datenübertragungsprotokoll zur Übertragung von Daten zwischen dem Internetserviceprovider 18 und dem Personalcomputer 60 verwendet als zur Datenübertragung zwischen dem Personalcomputer 26 und dem Sicherheitsmodul 28.

Anschließend prüft der Internetserviceprovider 18 die ID des Sicherheitsmoduls 28 auf Gültigkeit, den Zeitstempel auf Aktualität und prüft die übertragenen Zertifikate mit Hilfe des Public Keys des Electronic Postage Providers 24. Falls diese Prüfungen erfolgreich sind, registriert der Internetserviceprovider 18 den Benutzer C und speichert Identitätsmerkmale des Benutzers C in Verbindung mit dem Sicherheitsmodul 28, insbesondere in Verbindung mit der ID des Sicherheitsmoduls 28. Dadurch ist ein Benutzer C beim Internetserviceprovider für rechtsverbindliche E-Mail registriert und kann sich nachfolgend zum Senden und Empfangen für rechtsverbindliche E-Mails beim Internetserviceprovider über den Datenübertragungskanal 27 anmelden, wie für den Benutzer A nachfolgend beschrieben.

Zum Senden einer sicheren rechtsverbindlichen E-Mail-Nachricht gemäß der Erfindung erfolgt eine Anmeldung des Benutzers A über den Personalcomputer 26 beim Internetserviceprovider 18 und beim Electronic Postage Provider 24. Dazu kann bei Verwendung einer mobilen Transaktionsnummer vom Personalcomputer 26 eine Anforderung einer mobilen Transaktionsnummer über den Datenübertragungskanal 27 zum Internetserviceprovider 18 übertragen werden, der dann diese Anordnung über den Datenübertragungskanal 76 zu einem entsprechenden Dienst der Infrastruktur 16 weiterleitet. Die mobile Transaktionsnummer wird dann von diesem Dienst generiert und zum Sicherheitsmodul 28 übertragen. Im Falle einer Funknetzverbindung zum Sicherheitsmodul wird die Transaktionsnummer vorzugswiese mit Hilfe des Short Message Services zum Sicherheitsmodul 28 übertragen. Die Daten der zu sendenden E-Mail-Nachricht einschließlich eventueller Anlagen werden vom Personalcomputer 26 zum Sicherheitsmodul 28 übertragen. Zusätzlich wird eine Empfänger-ID und/oder andere Angaben zum Empfänger vom Personalcomputer 26 zum Sicherheitsmodul 28 übertragen. Ferner werden Informationen übertragen, ob der Nachrichteninhalt mit Hilfe einer öffentlich verifizierbaren Signatur signiert werden soll. Weiterhin kann die Information vom Personalcomputer zum Sicherheitsmodul 28 übertragen werden, ob ein separater Zeitstempel für die zu sendende Nachricht gefordert ist. Ferner wird, falls verfügbar, ein öffentlicher Schlüssel (Public Key) des Nachrichtenempfängers zum Verschlüsseln des Nachrichteninhalts der E-Mail-Nachricht vom Personalcomputer 26 zum Sicherheitsmodul 28 übertragen sowie Informationen über den Abrechnungsmodus, d. h. ob die an den Electronic Postage Provider 24 zum Verschlüsseln und/oder Signieren der Nachricht zu entrichtende Entgelte und/oder die an den Internetserviceprovider 18 zum Versand der rechtsverbindlichen E-Mail-Nachrichten zu entrichtende Entgelte über Guthabenkonten bei der Bank 54 oder über Guthabenkonten beim Electronic Postage Provider 24 und/oder beim Internetserviceprovider 18 entrichtet werden sollen.

Wir der öffentliche Schlüssel des Nachrichtenempfängers nicht mit vom Personalconputer 26 zum Sicherheitsmodul 28 übertragen oder zum Überprüfen des übertragenen öffentlichen Schlüssels des Nachrichtenempfängers wird ein öffentlicher Schlüssel des Empfängers aus einem Speicherbereich des Sicherheitsmoduls 28 ausgelesen und/oder durch das Sicherheitsmodul 28 über den Personalcomputer 26 beim Electronic Postage Provider 24 angefordert. Bei Anforderung des öffentlichen Schlüssels beim Electronic Postage Provider 24 wird dieser aus dem Schlüsselserver 56 ausgelesen und wird im Personalcomputer 26 zum Sicherheitsmodul 28 übertragen. Das Sicherheitsmodul 28 prüft, ob für den gewählten Abrechnungsmodus ausreichend Guthaben für den Benutzer A zur Verfügung steht, um die anfallenden Entgelte zu entrichten. Falls dies nicht der Fall ist, wird eine entsprechende Fehlermeldung vom Sicherheitsmodul 28 zum Personalcomputer 26 übertragen.

Falls ein für die Nachricht in individueller Zeitstempel angefordert ist, wird dieser an die Nachricht angefügt. Falls eine öffentlich verifizierbare Signatur erforderlich ist, wird der Nachrichteninhalt mit einem geheimen Schlüssel signiert und anschließend die Nachricht einschließlich der Signatur mit Hilfe des öffentlichen Schlüssels des Empfängers verschlüsselt. Alternativ kann ein symmetrischer Verschlüsselungsmodus mit Integritätscheck genutzt, und der dabei verwendete symmetrische Session Key mit dem öffentlichen Schlüssel des Empfängers verschlüsselt werden. Der verschlüsselten Nachricht kann die Absender-ID vorangestellt werden. Die Absender-ID ist vorzugsweise die ID des Sicherheitsmoduls 28. Alternativ oder zusätzlich kann auch die Benutzer-ID des Benutzers A angefügt werden.

Das zu entrichtende Entgelt für den Verschlüsselungs- und/oder Signaturdienst des Sicherheitsmoduls 28 wird im Sicherheitsmodul 28 von einem in einem Kontospeicherelement gespeicherten Guthaben abgezogen. Anschließend wird die verschlüsselte und/oder signierte Nachricht vom Sicherheitsmodul 28 zum Personalcomputer 26 übertragen. Das Sicherheitsmodul stellt nach dem Verschlüsseln und/oder Signieren der Nachricht eine korrekt formatierte E-Mail zusammen, die die zwischen den Endbenutzersystemen 12, 14 geschützte Nachricht enthält. Zum Übertragen der Nachricht vom ersten Endgerät 26 zum Internetserviceprovider 18 wird der Benutzer mit Hilfe der empfangenen mobilen Transaktionsnummer oder einem alternativen Identifizierungsmerkmal, wie beispielsweise eine Benutzeranmeldung durch Benutzername und Passwort, eine Identifizierung durch biometrische Daten und/oder durch ein aus einem Speicherelement, wie einer Chipkarte, ausgelesenes oder durch einen Algorithmus erzeugtes Zertifikat, beim Internetserviceprovider 18 angemeldet. Nach der Anmeldung kann die E-Mail-Nachricht über den Datenübertragungskanal 27 vom Personalcomputer 26 zum Internetserviceprovider 18 übertragen werden, der diese dann zum Endbenutzersystem des Empfängers 14 weiterleitet. Im vorliegenden Ausführungsbeispiel wird die E-Mail-Nachricht vom ersten Internetserviceprovider 18 über das Internet 22 zum zweiten Internetserviceprovider 20 übertragen und von diesem nach einer Benutzeranmeldung über das Endbenutzersystem 14 zu diesem übertragen.

Zum Abrufen einer empfangenen Mail durch das Endbenutzersystem 14 beim Internetserviceprovider 20 wird über den Personalcomputer 40 und den Internetserviceprovider 20 eine mobile Transaktionsnummer eines dafür zuständigen Dienstes der Infrastruktur 16 angefordert, die zum Sicherheitsmodul 44 übertragen wird. Mit Hilfe dieser mobilen Transaktionsnummer wird vorzugsweise bereits mit Anforderung der mobilen Transaktionsnummer übersandten Benutzerinformation, wie Benutzername, der Benutzer beim Internetprovider 20 angemeldet. Alternativ zur mobilen Transaktionsnummer können andere Identifizierungsmerkmale genutzt werden.

Nach erfolgreicher Anmeldung beim Internetserviceprovider 20 ruft der Personalcomputer 40 die beim Internetserviceprovider 20 gespeicherte E-Mail-Nachricht ab, sodass die Daten der E-Mail-Nachricht vom Internetserviceprovider 20 zum Personalcomputer 40 übertragen werden. Die verschlüsselte und/oder signierte E-Mail-Nachricht wird vom Personalcomputer 40 zum Sicherheitsmodul 44 übertragen. Das Sicherheitsmodul 44 ermittelt aus der übersandten E-Mail-Nachricht die Empfänger-ID und ermittelt den zur Empfänger-ID im Sicherheitsmodul 44 gespeicherten privaten Schlüssel und entschlüsselt mit Hilfe des privaten Schlüssels die E-Mail-Nachricht. Alternativ oder zusätzlich erfolgt eine Prüfung des Nachrichteninhalts mit Hilfe eines Signaturprüfschlüssels des Absenders, der vorzugsweise der Nachricht beigefügt ist oder vom Public-Key Verzeichnis des Electronic Postage Providers 24 bezogen wird.

Enthält die vom Personalcomputer 40 zum Sicherheitsmodul 44 übertragene Nachricht eine öffentlich prüfbare Signatur, so wird der Public Key des Absenders genutzt, um diese öffentliche Signatur zu prüfen. Der entschlüsselte Nachrichteninhalt wird mit der zusätzlichen Information versehen, ob eine gegebenenfalls erfolgte Signaturprüfung oder ein Integritätscheck erfolgreich war. Falls die Nachricht einen Zeitstempel umfasst, wird dieser der entschlüsselten Nachricht hinzugefügt. Die entschlüsselte Nachricht und gegebenenfalls die Zusatzinformationen werden vom Sicherheitsmodul 44 zum Personalcomputer 40 übertragen. Der Personalcomputer 40 verarbeitet die zusammen mit der entschlüsselten Nachricht vom Sicherheitsmodul 44 zum Personalcomputer 40 übertragenen Zusatzinformationen und stellt aus dem entschlüsselten Nachrichteninhalt eine korrekt formatierte E-Mail-Nachricht zusammen, die dann im Personalcomputer 40 verfügbar ist. Der Inhalt der E-Mail-Nachricht kann dann insbesondere über eine Anzeigeeinheit des Personalcomputers 40 ausgegeben werden. Ferner können die Zusatzinformationen, wie die erfolgreiche Signaturprüfung und ein Zeitstempel dem Empfänger B zusätzlich zum Nachrichteninhalt angezeigt werden.

Wie aus der Anordnung 10 nach Figur 1 ersichtlich, sind die Endbenutzersysteme 12 und 14 mit ihrem jeweiligen Internetserviceprovider 18, 20 sowie mit dem zentralen Electronic Postage Provider 24 über gleichartige Datenübertragungskanäle und Schnittstellen verbunden, wobei die Endbenutzersysteme 12, 14 sowie die anderen Komponenten der Anordnung 10 derart ausgebildet sind, dass sowohl sichere rechtsverbindliche E-Mail-Nachrichten vom Endbenutzersystem 12 zum Endbenutzersystem 14 als auch vom Endbenutzersystem 14 zum Endbenutzersystem 12 übertragen werden können. Das Senden von E-Mails vom Endbenutzersystem 14 kann auf die gleiche Weise erfolgen, wie für das Endbenutzersystem 12 beschrieben. Das Empfangen der E-Mail-Nachrichten mit Hilfe des Endbenutzersystems 12 erfolgt in gleicher Weise wie für das Endbenutzersystem 14 beschrieben.

Werden biometrische Daten zur Identifizierung eines Benutzers verwendet, können mit Hilfe eines biometrischen Sensors des Endbenutzersystems 12 biometrische Daten des Benutzers A erfasst und zum Internetserviceprovider 18 übertragen werden, der die übertragenen Daten mit gespeicherten biometrischen Referenzmustern vergleicht.

Ferner kann ein am Sicherheitsmodul 24 angemeldeter Benutzer die Benutzeridentität eines dritten Benutzers C zum Senden und Empfangen sicherer rechtsverbindlicher E-Mails nutzen, wenn er dafür von einem Administrator autorisiert worden ist. Dies ist insbesondere vorteilhaft, wenn der dritte Benutzer C eine juristische Person, wie eine Firma, ist. Somit kann eine Identifizierung eines Benutzers im Auftrag eines dritten durchgeführt werden. Dazu ist eine Benutzeridentität des dritten Benutzers C im Sicherheitsmodul 28 gespeichert und kann von jedem im Sicherheitsmodul 28 registrierten und für das versenden von Nachrichten für den dritten Benutzer C bzw. für das Empfangen von Nachrichten des dritten Benutzers C autorisierten Benutzer A des Personalcomputers 26 verwendet werden.

Der Zugang zum Sicherheitsmodul 28 kann dann durch einen PIN-Mechanismus (PIN - persönliche Identifikationsnummer) geschützt sein. Ein System zur Prüfung der Benutzeridentität kann beispielsweise ein Transaktionsnummern-Generator umfassen, der eine deterministische Sequenz pseudozufälliger Transaktionsnummern mittels Trap-Door One-Way-Funktion erzeugt und dafür einen geheimen Schlüssel verwendet, dessen öffentliches Gegenstück während der Registrierung des Sicherheitsmoduls 28 beim Internetserviceprovider 18 zur Prüfung der Transaktionsnummern hinterlegt wird.

Im Sicherheitsmodul werden die PINs, der geheime Schlüssel sowie das Programm zur Berechnung der Trap-Door One-Way-Funktion in einem nichtflüchtigen Speicher des Sicherheitsmoduls 28 abgelegt. Die Trap-Door One-Way-Funktion berücksichtigt neben der letzten verwendeten Transaktionsnummer auch spezifische Auftragsdaten, z. B. einen Hashwert, der zu übermittelnden Nachricht. Der Internetserviceprovider 18 prüft für jede eingehende Transaktionsnummer aufgrund der vorausgegangenen Transaktionsnummer und der aktuellen Auftragsdaten sowie des öffentlichen Schlüssels des Sicherheitsmoduls 28, ob die aktuelle Transaktionsnummer gültig ist. Eine solche Vorgehensweise eignet sich insbesondere beim Einsatz des Sicherheitsmoduls 28 in Unternehmen, bei denen mehrere Mitarbeiter des Unternehmens für den Zugang zum Sicherheitsmodul 28 zugelassen sind.

Zur Erhöhung der Sicherheit kann eine zeitliche Begrenzung der Gültigkeit der Identitätsmerkmale eines oder aller Benutzer durch das Sicherheitsmodul 28 und/ oder den Internetserviceprovider 18 vorgesehen werden. Alternativ oder zusätzlich kann die Gültigkeit der Identitätsmerkmale eines Endbenutzers auf eine voreingestellte Anzahl von Prüfvorgängen begrenzt werden.

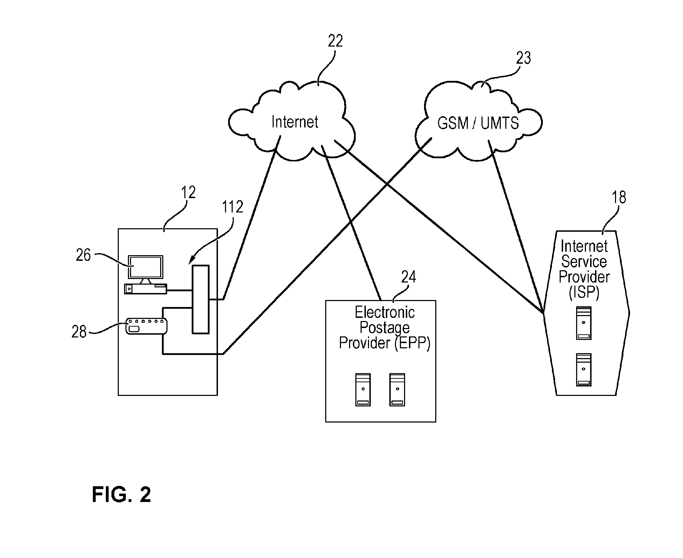

Figur 2 zeigt ein Blockschaltbild mit den von dem Endgerätesystem 12 des Benutzers A genutzten physikalischen Datenübertragungsverbindungen, über die die in Verbindung mit Figur 1 beschriebenen Datenübertragungskanäle aufgebaut und die beschriebenen Schnittstellen bereitgestellt werden. Der Personalcomputer 26 und das Sicherheitsmodul 28 des Endbenutzersystems 12 sind über ein internes Netzwerk, insbesondere einem Lokal Area Network (LAN), verbunden. Über dieses Netzwerk hat der Personalcomputer 26 Zugang zum Internet 22. Ferner ist der Electronic Postage Provider 24 und der Internetserviceprovider 18 mit dem Internet 22 verbunden, sodass ein Datenaustausch zwischen dem Endbenutzersystem 12, dem Electronic Postage Provider 24 und dem Internetserviceprovider 18 über das Internet 22 erfolgen kann.

Der Internetserviceprovider 18 ist ebenfalls mit dem Telekommunikationsnetzwerk 23 verbunden, sodass eine vom Endbenutzersystem 12 angeforderte mobile Transaktionsnummer vom Internetserviceprovider 18 über den Electronic Postage Provider 24 zum Sicherheitsmodul 28 übertragen werden kann.

Grundsätzlich werden die Kommunikationsverbindungen sowie der Aufbau der Datenübertragungskanäle immer vom Endbenutzersystem 12, vorzugsweise nur vom Endgerät 26 initiiert.

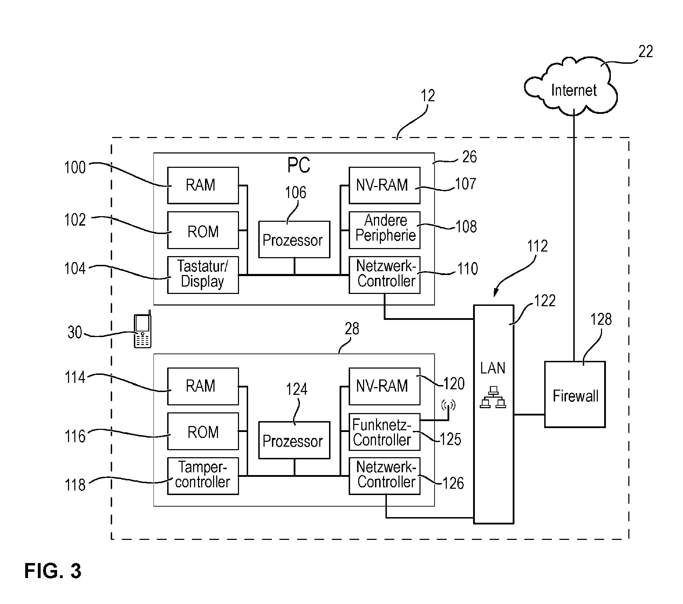

In Figur 3 ist ein Blockschaltbild mit Komponenten des Endbenutzersystems 12 gezeigt. Der Personalcomputer 26 des Endbenutzersystems 12 hat mehrere Komponenten, die ein RAM-Speicherelement 100, ein ROM-Speicherelement 102, eine Tastatur und ein Display 104, einen Prozessor 106, einen NVRAM-Speicher 107 , weitere Peripheriegeräte 108 sowie ein Netzwerkcontroller 110 umfassen. Die Komponenten sind im Personalcomputer 26 über entsprechende Datenleitungen und Bussysteme miteinander verbunden. Über den Netzwerkcontroller 110 ist der Personalcomputer 26 mit dem internen Netzwerk 112 des Endbenutzersystems 12 verbunden. Das Sicherheitsmodul 28 umfasst ein RAM-Speicherelement 114, ein ROM-Speicherelement 116, einen Tampercontroller 118, ein NVRAM-Speicherelement 120 oder einen anderen nichtflüchtigen Speicher sowie einen Prozessor 124 und ein Netzwerkcontroller 126. Ein solider Tampercontroller 118 ist eine elektronische Überwachungsschaltung, die detektiert, sobald ein geringer konstanter Strom durch einen leitfähigen Mäander, der das Sicherheitsmodul vollständig umschließt, unterbrochen wird. Eine derartige Unterbrechung wird als Manipulationsversuch gewertet und führt zum aktiven Löschen und Zerstören der geheimen kryptographischen Schlüssel des Sicherheitsmoduls 28, um deren Ausspähen wirksam und umgehend zu verhindern.

Über den Netzwerkcontroller 126 ist das Sicherheitsmodul 28 mit dem internen Netzwerk 112 verbunden. Vorzugsweise umfasst das Netzwerk 112 einen Netzwerkswitch 122. Über das interne Netzwerk 112 ist ein Datenaustausch zwischen dem Personalcomputer 26 und dem Sicherheitsmodul 30 möglich. Ferner ist eine Firewall 128 mit dem internen Netzwerk 112 verbunden. Über die Firewall 128 ist vom Personalcomputer 26 eine Verbindung zum Internet 22 aufbaubar. Eine Datenverbindung vom Sicherheitsmodul 28 zum Internet 22 und vom Internet 22 zum Sicherheitsmodul 28 wird durch die Firewall 128 verhindert.

Besonders vorteilhaft ist es, das Sicherheitsmodul 28, 44 als eigenständiges externes Gerät auszubilden, das über eine Netzwerkverbindung mit dem Endgerät 26 verbindbar ist. Im vorliegenden Ausführungsbeispiel ist das Endgerät als Personalcomputer 26 ausgebildet. Bei anderen Ausführungsbeispielen kann das Endgerät jedoch ein beliebiges anderes Datenverarbeitungsgerät, wie ein Laptop, ein Mobiltelefon, insbesondere ein Smartphone, ein Tablet-PC oder ein beliebiges anderes Gerät sein, mit dem E-Mails-Nachrichten empfangen und/oder gesendet werden können. Das Sicherheitsmodul 28 kann wie bereits erwähnt auch in einer Frankiermaschine integriert sein, die zum Frankieren von Postsendungen dient. Weiterhin ist auch eine Implementierung des Sicherheitsmoduls als Software im Personalcomputer 26 möglich.

Insbesondere kann als Trap-Door One-Way-Funktion ein modifizierter Blum-Blum-Shub Generator verwendet werden. Dabei kann als öffentlicher Schlüssel eine zusammengesetzte ganze Zahl von ausreichender Länge, aktuell von 2048 Bit, genutzt werden. Der öffentliche Schlüssel wird durch die Gleichung $n = p * q$ gebildet, wobei die Faktoren $p$ und $q$ Primzahlen von etwa gleicher Länge (Längendifferenz etwa 10 Bit) gebildet, wobei beide Faktoren kongruent 3 (mod 4) sind. Das Sicherheitsmodul 28 berechnet den initialen Zustand nach der Gleichung $S_0 = t \pmod{n}$ wobei $t$ eine beliebig gewählte Zahl größer 1 und kleiner $n$ ist. Der geheime Schlüssel besteht aus dem Zahlenpaar $p$ und $q$. Der zugehörige öffentliche Schlüssel, der beim Internetserviceprovider 18 und/oder beim Electronic Postage Provider 24 hinterlegt wird, umfasst $S_0$ und $n$. Für jeden Auftrag $i+1$, durch den z. B. die Nachricht $m$ als E-Mail-Nachricht übermittelt werden soll, erzeugt ein Transaktionsnummerngenerator eine Transaktionsnummer $TAN_{i+1}$ und aktualisiert seinen Zustand $S_i$ nach $s_{i+1}$ nach folgender Vorschrift: $s_{i+1} \leftarrow \sqrt{s_i h_{2048}(m)} \pmod{n}$, wobei $s_i$ den inneren Zustand des Transaktionsnummerngenerators nach Auftrag $i$ bezeichnet und $h$ eine Einweg-Hashfunktion, die Werte von konstant 2048 Bit Länge liefert.

Dann wird das Ergebnis $S_{i+1}$ als $TAN_{i+1}$ ausgegeben.

Der Internetserviceprovider als Prüfinstanz überprüft die Gültigkeit der übermittelten $TAN_{i+1}$ nach folgender Vorschrift: Die $TAN_{i+1}$ wird zur Rekonstruktion des inneren Zustands der Senderseite als $S_{i+1}$ angesetzt, wobei die Gültigkeit nach folgender Gleichung geprüft wird $s_i * h_{2048}(m) = s^2_{i+1} \pmod{n}$, wobei $S_i$ den inneren Zustand des Generators nach dem Auftrag $i$ bezeichnet.

Bei alternativen Ausführungsformen der Erfindung kann auch nur ein Internetserviceprovider vorgesehen sein, der sowohl die Kommunikation mit dem Endbenutzersystem 14 als auch mit Endbenutzersystem 12 durchführt. Alternativ zu einem Internetserviceprovider kann die in den Ausführungsbeispielen und in Verbindung mit der Erfindung beschriebene Funktion des Providers bzw. Internetserviceproviders auch durch ein E-Mail-Serviceprovider bereitgestellt werden, der dem Endbenutzersystem 12, 14 keinen Zugang zum Internet ermöglicht. Vielmehr wird der Endzugang zum Internet 22 durch einen separaten Internetserviceprovider oder einen anderen Zugang bereitgestellt und die Datenübertragung über das Internet 22 zur Kommunikation mit dem E-Mail Provider genutzt. Die Kommunikation zwischen den Komponenten des Endbenutzersystems 12 mit dem Internetserviceprovider 18 und mit dem Electronic Postage Provider 24 sowie mit der Infrastruktur für rechtsverbindliche E-Mail-Nachrichten ist überwiegend für das Endbenutzersystem 12, den Internetserviceprovider 18 und dem Electronic Postage Provider 24 beschrieben. In entsprechender Weise erfolgt auch die Kommunikation der Komponenten des Endbenutzersystems 14 untereinander, zwischen dem Endbenutzersystem 14 und dem Internetserviceprovider 20 und zwischen dem Endbenutzersystem 14 und dem Electronic Postage Provider 24. Erfolgt die Kommunikation der Endbenutzersysteme 12, 14 zum Übersenden der rechtsverbindlichen E-Mail über nur einen Provider 18, 20 so entfällt die verschlüsselte Übertragung der rechtsverbindlichen E-Mail zwischen den Servern 60, 66 der Provider 18, 20 über das Internet 22.

**Patentansprüche**

1. Verfahren zum sicheren Übertragen mindestens einer elektronischen Mitteilung von einem ersten Endgerät (26) eines ersten Benutzers (A) zu mindestens einem zweiten Endgerät (40) eines zweiten Benutzers (B),
   bei dem mit Hilfe des ersten Endgeräts (26) die elektronische Mitteilung erstellt wird,
   mit Hilfe des mindestens eines zweiten Endgeräts (40) die elektronische Mitteilung empfangen wird, wobei die elektronische Mitteilung vom ersten Endgerät (26) zum zweiten Endgerät (40) mit Hilfe einer Infrastruktur (16) zum rechtsverbindlichen Übertragen von elektronischen Mitteilungen übertragen wird,
   **dadurch gekennzeichnet, dass**
   die elektronische Mitteilung mit Hilfe eines mit dem ersten Endgerät (26) verbundenen ersten Sicherheitsmoduls (28) verschlüsselt und/oder signiert wird, bevor die elektronische Mitteilung mit Hilfe der Infrastruktur (16) vom ersten Endgerät (26) zu einem Provider (18) und von dem Provider (18) zum zweiten Endgerät (40) übertragen wird,

dass die übertragene elektronische Mitteilung mit Hilfe eines ein mit dem zweiten Endgerät (40) verbundenen zweiten Sicherheitsmoduls (44) entschlüsselt und/oder die Signatur der elektronischen Mitteilung geprüft wird,

und dass durch das erste Sicherheitsmodul (28) und/oder durch das zweite Sicherheitsmodul (44) ein Identifizierungsdienst zur Identifizierung eines im Sicherheitsmodul (28, 44) registrierten Benutzers (A, B, C) bereitgestellt wird, wobei der Benutzer (A, B, C) mit Hilfe einer Benutzeranmeldung identifiziert wird und wobei das Verschlüsseln und/oder Signieren der elektronischen Mitteilung mit Hilfe des ersten Sicherheitsmoduls (28) und/oder des Entschlüsselns und/oder das Prüfen der Signatur der elektronischen Mitteilung mit Hilfe des zweiten Sicherheitsmoduls (44) erst nach einer erfolgreichen Benutzeranmeldung durchgeführt wird.

2. Verfahren nach Anspruch 1, **dadurch gekennzeichnet, dass** der Provider (18) ein erster Provider (18) ist, und dass die vom ersten Endgerät (26) zum ersten Provider (18) übertragene verschlüsselte und/oder signierte elektronische Mitteilung vom ersten Provider (18) mit Hilfe eines zweiten Verschlüsselungsvorgangs verschlüsselt wird, dass die verschlüsselte elektronische Mitteilung zu einem zweiten Provider (20) übertragen wird, dass die durch den zweiten Verschlüsselungsvorgang bewirkte Verschlüsselung der Mitteilung durch den zweiten Provider (20) entschlüsselt wird und dass die weiterhin durch den ersten Verschlüsselungsvorgang verschlüsselte und/oder signierte elektronische Mitteilung zum zweiten Endgerät (40) übertragen wird.

3. Verfahren nach einem der vorhergehenden Ansprüche, **dadurch gekennzeichnet, dass** das erste Sicherheitsmodul (28) mit dem ersten Endgerät (26) über eine erste Datenleitung (34) und/oder dass das zweite Sicherheitsmodul (44) und das zweite Endgerät (40) über eine zweite Datenleitung (42) verbunden sind.

4. Verfahren nach Anspruch 3, **dadurch gekennzeichnet, dass** die erste Datenleitung (34) und/oder die zweite Datenleitung (42) durch einen Übertragungskanal in einem Netzwerk (112), vorzugsweise als Übertragungskanal in einem drahtlosen Netzwerk, gebildet werden.

5. Verfahren nach Anspruch 3, **dadurch gekennzeichnet, dass** die erste Datenleitung (34) durch ein Bussystem des ersten Endgeräts (26) und/oder durch eine standardisierte Anwendungsschnittstelle und/oder dass die zweite Datenleitung (42) durch ein Bussystem des zweiten Endgeräts (40) und/oder durch eine standardisierte Anwendungsschnittstelle bereitgestellt werden.

6. Verfahren nach einem der vorhergehenden Ansprüche, **dadurch gekennzeichnet, dass** durch die Infrastruktur (16) für rechtsverbindliche elektronische Mitteilungen

   - einen Registrierungsdienst für neue Benutzer (A, B, C),
   - einen Authentifizierungsdienst für registrierte Benutzer (A, B, C),
   - einen Sendedienst für zu sendende elektronische Mitteilungen,
   - einen Empfangsdienst für zu empfangende elektronische Mitteilungen,
   - einen Überprüfungsdienst zum Ermitteln und/oder Überprüfen von Empfängeradressen,
   - ein Nachrichtendienst zum Erzeugen von Zustellbestätigungen und/oder Empfangsbestätigungen
   und/oder
   - einen Archivierungsdienst zum Archivieren von Mitteilungen und/oder Dokumenten

   bereitgestellt wird.

7. Verfahren nach einem der vorhergehenden Ansprüche, **dadurch gekennzeichnet, dass** mindestens eine Datenverarbeitungseinheit (24, 58) zum Bereitstellen von Diensten zum sicheren Übertragen von elektronischen Mitteilungen vorgesehen wird und dass durch diese Datenverarbeitungseinheit (24, 58) den Versand der verschlüsselten und/oder signierten elektronischen Mitteilung freigegeben wird, vorzugsweise in Abhängigkeit von der Entrichtung eines Entgelts, und/oder ein Nutzerverwaltungsdienst zur Registrierung der Benutzer (A, B, C), deren Benutzeridentität in dem ersten Sicherheitsmodul (28) oder dem zweiten Sicherheitsmodul (44) gespeichert sind, bereitgestellt wird.

8. Verfahren nach einem der vorhergehenden Ansprüche, **dadurch gekennzeichnet, dass** die elektronische Mitteilung durch die Infrastruktur (16) über eine gesicherte Datenverbindung (27) zum Provider (18) übertragen wird, wobei durch das erste Endgerät (26) die kryptografisch gesicherte Identität des Providers (18) geprüft wird.

9. Verfahren nach einem der vorhergehenden Ansprüche, **dadurch gekennzeichnet, dass** Informationen über die gesicherte Identität des jeweiligen Sicherheitsmoduls (28, 44) vom jeweiligen Endgerät (26, 40) angefordert und vom jeweiligen Sicherheitsmodul (28, 44) zum jeweiligen Endgerät (26, 40) übertragen werden, und dass das jeweilige Endgerät (26, 40) mit Hilfe dieser Informationen beim Provider (18, 20) identifiziert wird.

10. Verfahren nach einem der vorhergehenden Ansprüche, **dadurch gekennzeichnet, dass** zumindest im ersten Sicherheitsmodul (28) eine Kontoinformation gespeichert wird, mit deren Hilfe ein im Kontospeicherelement gespeicherter Wert ermittelt wird, dass von dem Wert ein Betrag abgezogen wird, wenn durch das erste Sicherheitsmodul (28) eine elektronische Mitteilung verschlüsselt wird, die dann mit Hilfe des ersten Endgeräts (26) gesendet und mit Hilfe der Infrastruktur (16) zum zweiten Endgerät (40) übertragen wird, und dass der Differenzwert im Kontospeicherelement gespeichert wird.

11. Verfahren nach einem der vorhergehenden Ansprüche, **dadurch gekennzeichnet, dass** das erste Endgerät (26) zum Verschlüsseln und/oder zum Signieren der elektronischen Mitteilung mindestens eine der nachfolgenden Informationen zum ersten Sicherheitsmodul (28) überträgt:

- Nachrichteninhalt,
- Angaben zum Empfänger,
- Information ob eine öffentlich verifizierbare Signatur erforderlich ist,
- Information ob ein Zeitstempel erzeugt werden soll,
- der öffentliche Schlüssel des Nachrichtenempfängers zum Verschlüsseln des Nachrichteninhalts
- ein Signaturschlüssel zum Signieren des Nachrichteninhalts,
- Informationen zum Abrechnungsmodus.

12. Verfahren nach einem der vorhergehenden Ansprüche, **dadurch gekennzeichnet, dass** ein privater Schlüssel des Empfängers zum Verschlüsseln der elektronischen Mitteilung und/oder ein Signaturschlüssel zum Signieren der elektronischen Mitteilung in einem Speicherbereich des ersten Sicherheitsmoduls (28) und/oder in einem Speicherbereich einer zentralen Datenverarbeitungseinheit (24, 58) gespeichert wird, aus der der Schlüssel und/oder die Schlüssel zum Verschlüsseln und/oder Signieren der Nachricht ausgelesen wird, und dass das erste Sicherheitsmodul (28) den Schlüssel zum Verschlüsseln bzw. zum Signieren der Nachricht nutzt.

13. Verfahren nach einem der vorhergehenden Ansprüche, **dadurch gekennzeichnet, dass** das erste Sicherheitsmodul (28) und/oder zweite Sicherheitsmodul (44) eine in das jeweilige Endgerät (26, 40) integrierte Komponente (108) ist, die vorzugsweise über einen Datenbus mit weiteren Komponenten (100 bis 107, 110) des Endgeräts (26) verbunden ist und/oder dass das Sicherheitsmodul (26, 44) durch eine vom Endgerät abgearbeitete Software bereitgestellt wird.

14. Verfahren nach einem der vorhergehenden Ansprüche, **dadurch gekennzeichnet, dass** Informationen zwischen dem jeweiligen Sicherheitsmodul (26, 44) und einem Provider (18, 20), der zumindest einen Teil der Infrastruktur (16) bereitstellt, über das jeweilige Endgerät (26, 40) übertragbar sind, wobei keine direkte Datenübertragung zwischen dem Sicherheitsmodul (26, 44) und dem Provider (18, 20) möglich ist.

15. Anordnung zum sicheren Übertragen mindestens einer elektronischen Mitteilung von einem ersten Endgerät (26) eines ersten Benutzers (A) zu mindestens einem zweiten Endgerät (40) eines zweiten Benutzers (B),

wobei mit Hilfe des ersten Endgeräts (26) die elektronische Mitteilung erstellbar ist,

wobei mit Hilfe des mindestens einen zweiten Endgeräts (40) die elektronische Mitteilung empfangbar ist,

mit einer Infrastruktur (16) zum rechtsverbindlichen Übertragen der elektronischen Mitteilung vom ersten Endgerät (26) zum zweiten Endgerät (40),

mit einem mit dem ersten Endgerät (26) verbundenen ersten Sicherheitsmodul (28), das die elektronische Mitteilung verschlüsselt und/oder signiert, bevor die elektronische Mitteilung mit Hilfe der Infrastruktur (16) vom ersten Endgerät (26) zu einem Provider (18) und von dem Provider (18) zum zweiten Endgerät (40) übertragen werden kann,

mit einem mit dem zweiten Endgerät (40) verbundenen zweiten Sicherheitsmodul (44), das die elektronische Mitteilung entschlüsselt und/oder die Signatur der elektronischen Mitteilung prüft,

wobei das erste Sicherheitsmodul (28) und/oder das zweite Sicherheitsmodul (44) ein Identifizierungsdienst zur Identifizierung eines im Sicherheitsmodul (28, 44) registrierten Benutzers (A, B, C) bereitstellt, wobei der Benutzer (A, B, C) mit Hilfe einer Benutzeranmeldung identifiziert wird und wobei das Verschlüsseln und/oder Signieren der elektronischen Mitteilung mit Hilfe des ersten Sicherheitsmoduls (28) und/oder des Entschlüsselns und/oder das Prüfen der Signatur der elektronischen Mitteilung mit Hilfe des zweiten Sicherheitsmoduls (44) erst nach einer erfolgreichen Benutzeranmeldung durchgeführt wird.

16. Anordnung nach Anspruch 15, **dadurch gekennzeichnet, dass** der Provider (18) ein erster Provider (18) ist, und dass die vom ersten Endgerät (26) zum ersten Provider (18) übertragene verschlüsselte und/oder signierte elektronische Mitteilung vom ersten Provider (18) mit Hilfe eines zweiten Verschlüsselungsvorgangs verschlüsselt wird, dass die verschlüsselte elektronische Mitteilung zu einem zweiten Provider (20) übertragen wird, dass die durch den zweiten Verschlüsselungsvorgang bewirkte Verschlüsselung der Mitteilung durch den zweiten Provider (20) entschlüsselt wird und dass die weiterhin durch den ersten Verschlüsselungsvorgang verschlüsselte und/oder signierte elektronische Mitteilung zum zweiten Endgerät (40) übertragen wird.

Nationale / Internationale Infrastruktur für rechtsverbindliche Email

Internet
Service
Provider
(ISP)

Internet
Service
Provider
(ISP)

Internet

Electronic
Postage
Provider (EPP)

Bank

FIG. 1

**FIG. 2**

FIG. 3